# EUROPÄISCHE PATENTANMELDUNG

(11) **EP 1 164 749 A1**
(43) Veröffentlichungstag der Anmeldung: **19.12.2001**
(21) Anmeldenummer: 00112678.8
(22) Anmeldetag: 15.06.2000
(51) Int. Cl.: H04L 12/14, H04M 15/00

(54) **Verfahren zum Erfassen der zeitlichen Nutzungsentgelte für die Nutzung von Informationen aus einem Computernetzwerk**

(71) Anmelder: Jochen Schrör, 67663 kaiserslautem (DE)
(72) Erfinder: Jochen Schrör, 67663 kaiserslautem (DE)
(74) Vertreter: Cohausz & Florack

(57) **Zusammenfassung**

Die Erfindung betrifft ein Verfahren zum Erfassen der zeitlichen Nutzungsentgelte für die Nutzung von Informationen aus einem Computernetzwerk, insbesondere von Internetseiten, bei dem von mindestens einem Anbieter mit Hilfe eines externen Computers Informationen über das Computernetzwerk angeboten werden, wobei die Informationen unter mindestens einer speziell kodierten Adresse (URL) hinterlegt werden, bei dem von einem Nutzer mit Hilfe einer auf seinem Computer (Client) gespeicherten Zugangssoftware eine der speziell kodierten Adressen (URL) eingegeben wird, bei dem vom Client eine Verbindung zu einem Zugangscomputer (Server) hergestellt und die Adreßanfrage des Nutzers an den Server übermittelt wird, bei dem vom Client die spezielle Kodierung der eingegebenen Adresse (URL) erkannt wird, bei dem vom Client für einen Verbindungsaufbau mit einer der speziell kodierten Adressen (URL) eine Telekommunikationsverbindung mit einem speziellen zeitlichen Tarif verwendet wird, bei dem das zeitliche Nutzungsentgelt abhängig von der Dauer der Nutzung der unter der speziell kodierten Adresse (URL) gespeicherten Informationen solange berechnet wird, bis vom Nutzer eine nicht speziell kodierte Adresse eingegeben oder eine Zeitüberschreitung ohne weitere Eingabe durch den Nutzer festgestellt wird, bei dem vom Server die Adreßanfrage des Nutzers an einen Verbindungscomputer (Gateway) übermittelt wird, bei dem vom Gateway die Informationen zu der übermittelten Adresse vom externen Computer des Anbieters abgefragt werden, bei dem vom Gateway in den Informationen enthaltene Querverweise (Links) auf andere Adressen im Computernetzwerk in die für das Erfassen der zeitlichen Nutzungsentgelte geeignete Kodierung konvertiert werden und bei dem vom Gateway die Informationen nach erfolgter Konvertierung auf den Server übertragen werden.

## Beschreibung

Die Erfindung betrifft ein Verfahren zum Erfassen der zeitlichen Nutzungsentgelte für die Nutzung von Informationen aus einem Computernetzwerk, insbesondere von Internetseiten. Ebenfalls betrifft die Erfindung ein EDV-System zum Erfassen der zeitlichen Nutzungsentgelte für die Nutzung von Informationen aus einem Computernetzwerk, insbesondere von Internetseiten, zur Verwirklichung des genannten Verfahrens. Schließlich betrifft die Erfindung ein Computerprogramm zum Erfassen der zeitlichen Nutzungsentgelte für die Nutzung von Informationen aus einem Computernetzwerk, insbesondere von Internetseiten, mit Programmbefehlen für ein EDV-System zur Verwirklichung des genannten Verfahrens.

Aus dem Stand der Technik, von dem die vorliegende Erfindung ausgeht, ist ein auf Hyper Text Transfer Protocol (HTTP) basierendes Verfahren zum Erfassen der zeitlichen Nutzungsentgelte für die Nutzung von Informationen aus einem Computernetzwerk (Micropaymentverfahren), das unter der Bezeichnung Net900 betrieben wird, bekannt. Das Verfahren ermöglicht es, Hyper Text Markup Language (HTML) Seiten kostenpflichtig anzubieten.

Um das Verfahren realisieren zu können, wird auf dem lokalem Computer des Nutzers eine Software installiert, wodurch der Computer zum Client wird, der dann als Proxy für alle HTTP-Adreßanfragen arbeitet. Wird nun eine Adresse (URL) angefordert, die der speziellen Kodierung von Net900 entspricht, baut der Client nach Rücksprache mit dem Nutzer eine kostenpflichtige Verbindung über eine spezielle Telekommunikationsverbindung, bspw. in Deutschland eine 0190-Telefonnummer, auf. Diese Verbindung bleibt solange bestehen, bis eine URL aufgerufen wird, die nicht gemäß Net900 kodiert ist, oder eine definierte Zeitüberschreitung (Timeout) eintritt.

Das Problem für potentielle Anbieter des Net900 Micropaymentverfahrens ist, daß alle abzurechnenden Adressen (URLs) (d.h. HTML-Seiten, Bilder, Sound, Java-Script, ...) der speziellen Kodierung, bspw. von Net900, folgen müssen. Für die meisten Anbieter, die ihr Angebot auch noch über andere Zahlungssysteme abrechnen (wollen), bedeutet diese Einschränkung, daß sie ihre Internetangebote in zweifacher Ausführung pflegen müssen. Dieses ist ein für die Praxis zu aufwendiges und fehleranfälliges Verfahren, zumal Programme (CGI-BIN) ebenfalls konvertiert werden müssen.

Der Erfindung liegt daher das technische Problem zugrunde, ein Verfahren, ein EDV-System und ein Computerprogramm anzugeben, durch die das Erfassen der zeitlichen Nutzungsentgelte für die Nutzung von Informationen aus einem Computernetzwerk, insbesondere von Internetseiten, insbesondere für die Anbieter vereinfacht wird.

Das zuvor aufgezeigte technische Problem wird erfindungsgemäß durch ein Verfahren mit den Merkmalen des Anspruches 1 gelöst,
- bei dem von mindestens einem Anbieter mit Hilfe eines externen Computers Informationen über das Computernetzwerk angeboten werden, wobei die Informationen unter mindestens einer speziell kodierten Adresse (URL) hinterlegt werden,
- bei dem von einem Nutzer mit Hilfe einer auf seinem Computer (Client) gespeicherten Zugangssoftware eine der speziell kodierten Adressen (URL) eingegeben wird,
- bei dem vom Client eine Verbindung zu einem Zugangscomputer (Server) hergestellt und die Adreßanfrage des Nutzers an den Server übermittelt wird,
- bei dem vom Client die spezielle Kodierung der eingegebenen Adresse (URL) erkannt wird,
- bei dem vom Client für einen Verbindungsaufbau mit einer der speziell kodierten Adressen (URL) eine Telekommunikationsverbindung mit einem speziellen zeitlichen Tarif verwendet wird,
- bei dem das zeitliche Nutzungsentgelt abhängig von der Dauer der Nutzung der unter der speziell kodierten Adresse (URL) gespeicherten Informationen solange berechnet wird, bis vom Nutzer eine nicht speziell kodierte Adresse eingegeben oder eine Zeitüberschreitung ohne weitere Eingabe durch den Nutzer festgestellt wird,
- bei dem vom Server die Adreßanfrage des Nutzers an einen Verbindungscomputer (Gateway) übermittelt wird,
- bei dem vom Gateway die Informationen zu der übermittelten Adresse vom externen Computer des Anbieters abgefragt werden,
- bei dem vom Gateway in den Informationen enthaltene Querverweise (Links) auf andere Adressen im Computernetzwerk in die für das Erfassen der zeitlichen Nutzungsentgelte geeignete Kodierung konvertiert werden und
- bei dem vom Gateway die Informationen nach erfolgter Konvertierung auf den Server übertragen werden.

Das dem erfindungsgemäßen Verfahren zugrundeliegende Zwischenschalten eines Gateways vermeidet den oben beschriebenen redaktionellen Aufwand der doppelten Anbietung der Internetseiten eines Anbieters, indem es eine automatische Konvertierung beliebiger Webseiten nach der speziellen Kodierung ermöglicht.

Dazu verhält sich das Gateway gegenüber dem Client mit seinem Computernetzwerk-Browser wie der Server, der angesprochen werden soll, baut gleichzeitig aber eine Verbindung zum eigentlichen Internet-Server auf und holt dort als Client die erforderlichen Informationen in Form von einzelnen Dokumenten. Sobald es sich bei den angeforderten Dokumenten um HTML-Seiten handelt, werden diese nun anhand einer auf spezielle Muster gerichtete Suche (Mustersuche) nach weiteren Adressen durchsucht.

Jede gefundene Adresse wird aufgelöst, in die spezielle Kodierung konvertiert und dem Text der Informationen wieder zugefügt. Erst dann wird die Seite dem Server und weiter dem Client mit seinem Browser übermittelt.

Durch diese Technik ist es möglich, fast beliebige Angebote über das bekannte Abrechnungsverfahren, bspw. über Net900, abzurechnen, ohne diese in mühevoller Arbeit an die spezielle Kodierung, bspw. Net900-Format, anpassen zu müssen. Die Umsetzung erfolgt dabei transparent für den Browser so schnell, daß ein Unterschied zu einem normalen Zugriff auf diese Seiten über das Internet nicht zu erkennen ist.

Mit anderen Worten wird zur Unterstützung des bekannten Micropaymentverfahrens, bspw. Net900, ein Gateway eingesetzt, das die vom Server, bspw. Net900-Server, gelieferten HTTP-Adreßanfragen entgegennimmt. Diese werden in allgemeine Adreßanfragen (Common-Internet-Requests) konvertiert und die so qualifizierten Informationen (Dokumente) von dem externen Computer abgerufen. Die abgerufenen Dokumente werden dann vor der Übermittlung an den Nutzer derart aufgearbeitet, daß (möglichst) alle in ihnen enthaltenen Querverweise in eine der speziellen Kodierung, bspw. Net900, konforme Adresse transformiert werden.

In bevorzugter Weise werden vom Anwender die Querverweise in den Informationen in vorgegebenen Formaten eingefügt, damit das Gateway ohne weiteres sämtliche zu konvertierende Querverweise auffindet und für eine kostenpflichtige Anzeige konvertieren kann.

Weiterhin wird vom Gateway für ein Erkennen der Querverweise in den Informationen nach typischen Anfängen und/oder Endungen (Extension) gesucht. Dazu wird die Mustersuche, daß heißt das Erkennen von Adressen im Text des Dokuments, sowohl nach typischen Adreß-Anfängen (z.B. http://, href=, src=, ...), als auch nach typischen Erweiterungen (Extensionen) von Adressen (.html, .htm, .gif, .jpg, .asp, ...) gesucht. Mit Querverweisen sind dabei alle Verweise auf externe Dateien gemeint, also z.B. zu ladende Bilder, HyperLinks, Backgrounds, Dateiangaben in Javascripts, etc..

Weiterhin ist es bevorzugt, daß vom Gateway die unter der speziell kodierten Adresse hinterlegten Informationen nur dann auf Querverweise hin untersucht werden, wenn diese in einem vorgegebenen Format, vorzugsweise Hyper Text Markup Language (HTML) hinterlegt worden sind. Dieses Format ist im Internet weit verbreitet und dient hauptsächlich der Übermittlung schriftlicher Informationen für die Anzeige und die Steuerung des Aufbaus der damit verbundenen Internetseite. Im Gegensatz dazu werden graphische oder bildliche Darstellungen in vom HTML-Format unterschiedlichen Formaten hinterlegt und übermittelt. Vorzugsweise wird dabei vom Gateway der HTML-Text der Informationen zeilenweise untersucht. Damit wird sichergestellt, daß die Mustersuche vereinfacht und zuverlässiger durchgeführt werden kann.

Insbesondere werden vom Gateway sämtliche Querverweise konvertiert, die nicht ausdrücklich vom Anbieter durch entsprechende Markierungen davon ausgenommen worden sind. Damit wird sichergestellt, daß das gesamte Angebot eines Anbieters kodiert übermittelt und somit kostenpflichtig dem Nutzer zur Verfügung gestellt wird. Als mögliche Markierungen können Kommentare im Text der Dokumente eingefügt werden, wie bspw. für das Net900 Verfahren "<!-Net900off>" und "<!-Net900on>". Durch diese flexible Technik ist es möglich, im Text genannte Adressen (URLs) oder auch Ausstiegs-Querverweise (Exit-Links) von einer Konvertierung auszuschließen.

Gemäß einer weiteren Lehre der vorliegenden Erfindung wird das oben genannte technische Problem auch durch ein EDV-System nach Anspruch 9 zum Erfassen der zeitlichen Nutzungsentgelte für die Nutzung von Informationen aus einem Computernetzwerk, insbesondere von Internetseiten, zur Verwirklichung der erfindungsgemäßen Verfahrens gelöst, das in der nachfolgenden Beschreibung von Ausführungsbeispielen näher erläutert wird.

Ebenso wird das technische Problem durch ein Computerprogramm nach Anspruch 10 oder 11 zum Erfassen der zeitlichen Nutzungsentgelte für die Nutzung von Informationen aus einem Computernetzwerk, insbesondere von Internetseiten, mit Programmbefehlen für ein zuvor angegebenes EDV-System zur Verwirklichung des erfindungsgemäßen Verfahrens gelöst.

Im folgenden wird die Erfindung anhand von Ausführungsbeispielen näher erläutert, wozu auf die beigefügte Zeichnung Bezug genommen wird. In der Zeichnung zeigen
- Fig. 1: ein erstes Ablaufdiagramm zur Erläuterung des erfindungsgemäßen Verfahrens,
- Fig. 2: ein zweites Ablaufdiagramm zur Erläuterung des erfindungsgemäßen Verfahrens,
- Fig. 3: ein erstes EDV-System zur Verwirklichung des erfindungsgemäßen Verfahrens und
- Fig. 4: ein zweites EDV-System zur Verwirklichung des erfindungsgemäßen Verfahrens.

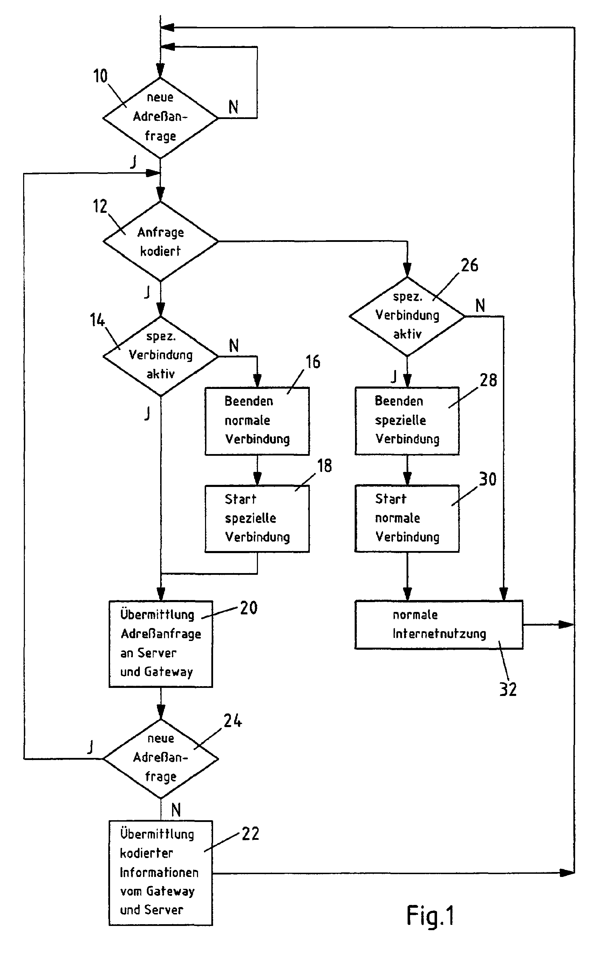

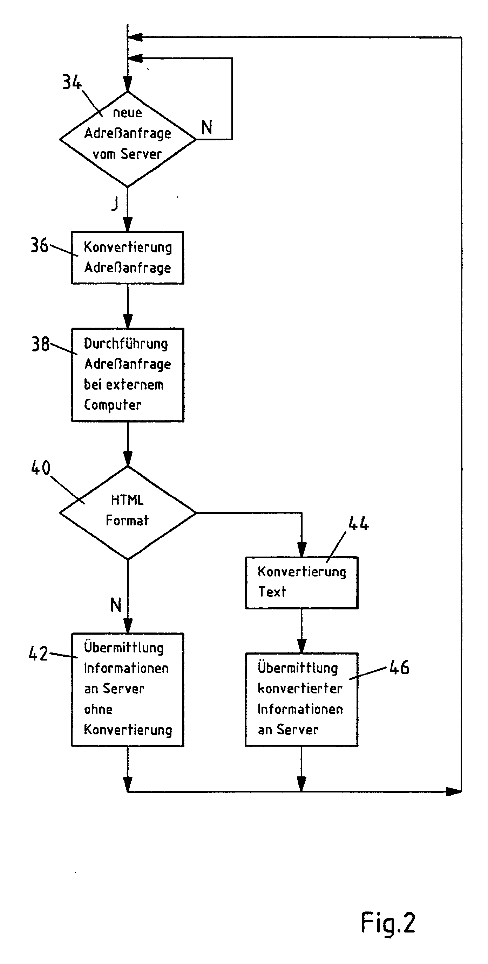

Die Fig. 1 und 2 zeigen in zwei getrennten Abschnitten den Ablauf des erfindungsgemäßen Verfahrens, wobei Fig. 1 den Ablauf zeigt, wie er vom Client realisiert wird, während Fig. 2 den Ablauf des Verfahrens im Bereich des Gateways darstellt.

Als Ausgangsposition für das Verfahren findet im Schritt 10 eine Abfrage statt, ob der Nutzer eine neue Adreßanfrage an den Client abgegeben hat. Ist dieses nicht der Fall, so wird eine endlose Schleife durchlaufen.

Nach der Eingabe einer neuen Adreßanfrage wird im Schritt 12 festgestellt, ob diese Anfrage kodiert ist, um vom Client als spezielle Anfrage interpretiert zu werden. Dabei kann eine bestimmte Zeichenfolge innerhalb der Adreßanfrage als Kriterium einer Kodierung herangezogen werden, bspw. der Zeichenkette "Net900" für das oben beschriebene bekannte Micropaymentverfahren.

Ist die Adreßanfrage in der vorgegebenen speziellen Weise kodiert, so wird im Schritt 14 überprüft, ob bereits eine Telekommunikationsverbindung mit einem speziellen zeitlichen Tarif verwendet wird. Ist dieses nicht der Fall, so wird im Schritt 16 die bisherige normale Verbindung beendet und im Schritt 18 die spezielle Telekommunikationsverbindung, bspw. in Deutschland über eine 0190-Telefonverbindung, aufgebaut.

Ist die spezielle Telekommunikationsverbindung aufgebaut, so wird im Schritt 20 die Adreßanfrage an den Server und weiter an das Gateway übermittelt. Das dabei ablaufende Verfahren wird weiter unten im Detail anhand der Fig. 2 näher erläutert.

Während der Wartezeit bis zur Übermittlung der angeforderten Informationen durch den Server im Schritt 22 wird im Schritt 24 überprüft, ob eine neue Eingabe einer Adreßanfrage durch den Nutzer erfolgt. Ist dieses der Fall, so wird die Antwort und Übermittlung der Informationen durch den Server nicht abgewartet, sondern das Verfahren erneut mit Schritt 12 mit der Überprüfung einer möglichen Kodierung weiter fortgesetzt.

Wird im Schritt 12 festgestellt, daß die Adreßanfrage nicht in spezieller Weise kodiert ist, so wird das Verfahren mit dem Entscheidungsschritt 26 fortgesetzt, in dem festgestellt wird, ob bereits eine spezielle Telekommunikationsverbindung besteht oder nicht. Besteht diese, so wird diese im Schritt 28 beendet und eine normale Telekommunikationsverbindung wird aufgebaut.

Besteht die normale Telekommunikationsverbindung, so kann im Schritt 30 eine normale Internetanwendung erfolgen. Danach wird im Schnitt 10 erneut abgefragt, ob der Nutzer eine neue Adreßanfrage eingegeben hat.

Fig. 2 zeigt den Teil des erfindungsgemäßen Verfahrens, der auf dem Gateway abläuft.

Im Schritt 34 wird abgefragt, ob vom Server eine vom Client abgesandte kodierte Adreßanfrage übermittelt wird. Ist dieses nicht der Fall, so wird eine endlose Schleife durchlaufen.

Liegt eine neue kodierte Adreßanfrage am Gateway vor, so wird im Schritt 36 die kodierte Adreßanfrage in eine normale Internet-Adreßanfrage konvertiert, die dann im Schritt 38 als normale Internet-Adreßanfrage beim externen Computer des Anbieters genutzt wird.

Als nächstes wird im Schritt 40 überprüft, ob die vom externen Computer übermittelten Informationen im Format HTML vorliegen. Ist dieses nicht der Fall, so werden die Informationen im Schritt 42 ohne eine weitere Konvertierung an den Server übermittelt.

Liegen die Informationen dagegen im HTML Format vor, so führt das Gateway im Schritt 44 eine Mustersuche und eine Konvertierung der im HTML-Text enthaltenen Adressen (URLs) durch. Diese werden dann in kodierter Form im Schritt 46 auf den Server übermittelt.

Damit Querverweise (Links) konvertiert werden können, entsprechen sie den folgenden beispielhaften Anforderungen. Diese Anforderungen werden vom Anbieter und Erzeuger der Informationen bzw. Textdateien eingehalten:
- Querverweise werden erkannt über ihre Erweiterung (Extension), z.B. "gif", ".asp" oder auch ".html". Dies setzt voraus, daß Links auch eine Extension haben. Links, die nur auf Verzeichnisse ohne konkrete Dateiangabe, also ohne Erweiterung, verweisen, müssen dementsprechend abgeändert werden.
- Querverweise sollten durch Anführungszeichen ("" oder ") gekapselt werden. Als weitere Indizes für den Anfang eines Links gelten das Leerzeichen und das Gleichheitszeichen. Indizes für das Ende eines Links sind neben den beschriebenen Anführungszeichen das Leerzeichen und das Fragezeichen.
- Querverweise müssen komplett in einer Zeile stehen, ein Zeilenumbruch innerhalb eines Links ist nicht erlaubt.
- Erweiterungen (Extension) müssen im Klartext angegeben werden.

Das Suchen eines Querverweises (Mustersuche) mittels eines Analyseprogramms wird am folgenden Beispiel näher erläutert.
a) Ein Zeiger wird über den Text einer Zeile eines HTML-Textes verfahren, bis die Zeichenkette der Zeile eine Erweiterung (Extension) enthält. Zum Beispiel ".html" in "http://www.irgendwo.de/index.html".
b) Der Zeiger wird zurückgefahren, bis der Anfang des Querverweises gefunden wird, hier "http:".
c) Der so aufgefundene Querverweise wird um eine vorgegebene Zeichenkette erweitert, so daß bspw. "http://www.server.de/net900?remotelink,tarif=60156? http://www.irgendwo.de/index.html" entsteht. Dieser kodierte Querverweis enthält nunmehr die Angabe des Servers, über den die kodierten Abfragen durchgeführt werden, die Angabe "net900" als Hinweis auf die spezielle Kodierung und einen Abrechnungsmodus als Tarif nach "tarif=60156".

Wird nach einem Übermitteln des so kodierten Querverweises an den anfordernden Client dieser Querverweis vom Nutzer aufgerufen, so ist dieser in spezieller Weise kodiert und wird dementsprechend weiter behandelt.

Anschließend wird das Verfahren wieder mit der Abfrage im Schritt 34 fortgesetzt, ob eine Adreßanfrage vom Server vorliegt.

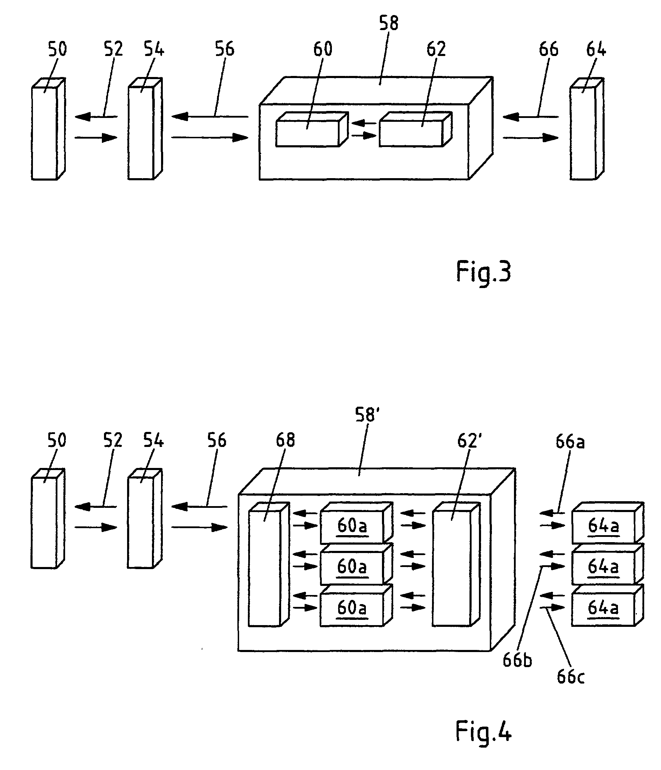

Fig. 3 zeigt ein erstes Ausführungsbeispiel eines EDV-Systems zum Erfassen der zeitlichen Nutzungsentgelte für die Nutzung von Informationen aus einem Computernetzwerk, insbesondere von Internetseiten, zur Verwirklichung des zuvor dargestellten Verfahrens.

Der Client 50 eines Nutzers ist über eine Datenleitung 52 mit einem Server 54 verbunden und tauscht Daten aus, wie mit den Doppelpfeilen dargestellt ist. Der Server 54 ist wiederum über eine Datenleitung 56 mit einem Gateway 58 verbunden, das das eigentliche Gate 60 und einen Zwischenspeicher (Cache) 62 aufweist. Das Gateway ist schließlich mit einem externen Computer 64 über eine Datenleitung 66 verbunden. Auf dem externen Computer 64 eines Anbieters sind die Informationen abgelegt, die vom Client mittels des oben beschriebenen Verfahrens abgefragt werden können. Die beschriebenen Datenleitungen 52 und 66 sind vorzugsweise jeweils temporäre Datenleitung, die über Internetverbindungen realisiert werden können. Die Datenleitung 56 kann sowohl dauerhaft als auch temporär sein, da der Server 54 und das Gateway 58 am gleichen Standart angeordnet sein können.

Fig. 4 zeigt ein zweites Ausführungsbeispiel eines EDV-Systems zum Erfassen der zeitlichen Nutzungsentgelte für die Nutzung von Informationen aus einem Computernetzwerk, insbesondere von Internetseiten, zur Verwirklichung des zuvor dargestellten Verfahrens. Bei diesem Ausführungsbeispiel greift der Client 50 über die Datenleitungen 52 und 56 mittels des Servers 54 auf ein Gateway 58' zu, das eine Mehrzahl von Gates 60a, 60b und 60c aufweist. Diese werden über einen Multiplexer 68 mit den vom Client 50 übermittelten Adreßanfragen selektiv beaufschlagt. Über, vorzugsweise temporäre Datenleitungen 66a, 66b und 66c sind die einzelnen Gates 60a, 60b und 60c mit den externen Computern 64a, 64b und 64c verbunden, um die jeweils dort abgelegten Informationen zu übermitteln.

Der in Fig. 4 dargestellte Aufbau des Gateways hat den Vorteil, daß eine Mehrzahl von Gates mit entsprechenden externen Rechnern von gleichen oder verschiedenen Anbietern in Verbindung treten können. Somit ist eine variable Nutzung eines Gateways für mehrere Angebote eines oder mehrerer Anbieter möglich. Selbstverständlich ist dabei in Fig. 4 die Anzahl drei für die Anzahl der Gates willkürlich gewählt und stellt keine Einschränkung der Erfindung dar.

## Patentansprüche

1. Verfahren zum Erfassen der zeitlichen Nutzungsentgelte für die Nutzung von Informationen aus einem Computernetzwerk, insbesondere von Internetseiten,
- bei dem von mindestens einem Anbieter mit Hilfe eines externen Computers Informationen über das Computernetzwerk angeboten werden, wobei die Informationen unter mindestens einer speziell kodierten Adresse (URL) hinterlegt werden,
- bei dem von einem Nutzer mit Hilfe einer auf seinem Computer (Client) gespeicherten Zugangssoftware eine der speziell kodierten Adressen (URL) eingegeben wird,
- bei dem vom Client eine Verbindung zu einem Zugangscomputer (Server) hergestellt und die Adreßanfrage des Nutzers an den Server übermittelt wird,
- bei dem vom Client die spezielle Kodierung der eingegebenen Adresse (URL) erkannt wird,
- bei dem vom Client für einen Verbindungsaufbau mit einer der speziell kodierten Adressen (URL) eine Telekommunikationsverbindung mit einem speziellen zeitlichen Tarif verwendet wird,
- bei dem das zeitliche Nutzungsentgelt abhängig von der Dauer der Nutzung der unter der speziell kodierten Adresse (URL) gespeicherten Informationen solange berechnet wird, bis vom Nutzer eine nicht speziell kodierte Adresse eingegeben oder eine Zeitüberschreitung ohne weitere Eingabe durch den Nutzer festgestellt wird,
- bei dem vom Server die Adreßanfrage des Nutzers an einen Verbindungscomputer (Gateway) übermittelt wird,
- bei dem vom Gateway die Informationen zu der übermittelten Adresse vom externen Computer des Anbieters abgefragt werden,
- bei dem vom Gateway in den Informationen enthaltene Querverweise (Links) auf andere Adressen im Computernetzwerk in die für das Erfassen der zeitlichen Nutzungsentgelte geeignete Kodierung konvertiert werden und
- bei dem vom Gateway die Informationen nach erfolgter Konvertierung auf den Server übertragen werden.

2. Verfahren nach Anspruch 1,
bei dem vom Anwender die Querverweise (Links) in den Informationen in vorgegebenen Formaten eingefügt werden.

3. Verfahren nach Anspruch 1 oder 2,
bei dem vom Gateway für ein Erkennen der Querverweise (Links) in den Informationen nach typischen Anfängen und/oder Endungen gesucht wird.

4. Verfahren nach einem der Ansprüche 1 bis 3,
bei dem vom Gateway die unter der speziell kodierten Adresse hinterlegten Informationen nur dann auf Querverweise (Links) hin untersucht werden, wenn diese in einem vorgegebenen Format, vorzugsweise Hyper Text Markup Language (HTML) hinterlegt worden sind.

5. Verfahren nach einem der Ansprüche 1 bis 4,
bei dem vom Gateway der Text der Informationen zeilenweise untersucht wird.

6. Verfahren nach einem der Ansprüche 1 bis 5,
bei dem vom Gateway sämtliche Querverweise (Links) konvertiert werden, die nicht ausdrücklich vom Anbieter durch entsprechende Markierungen davon ausgenommen worden sind.

7. Verfahren nach einem der Ansprüche 1 bis 6,
bei dem für jeden Anbieter von Informationen jeweils ein Gateway verwendet wird.

8. Verfahren nach Anspruch 7,
bei dem jedes Gateway an die Anforderungen des zugeordneten Anbieters angepaßt wird.

9. EDV-System zum Erfassen der zeitlichen Nutzungsentgelte für die Nutzung von Informationen aus einem Computernetzwerk, insbesondere von Internetseiten, zur Verwirklichung eines Verfahrens nach einem der Ansprüche 1 bis 8.

10. Computer-Programm zum Erfassen der zeitlichen Nutzungsentgelte für die Nutzung von Informationen aus einem Computernetzwerk, insbesondere von Internetseiten, mit Programmbefehlen für ein EDV-System zur Verwirklichung eines Verfahrens nach einem der Ansprüche 1 bis 9.

11. Computer-Programm nach Anspruch 10, gespeichert auf einem maschinenlesbaren Medium.
